# EUROPEAN PATENT APPLICATION

(11) **EP 4 620 326 A1**
(43) Date of publication of application: **24.09.2025**
(21) Application number: 23890318.1
(22) Date of filing: 21.08.2023
(51) Int. Cl.: A24F 40/46, A24F 40/57, H05B 3/00, H05B 3/02

(54) **AEROSOL GENERATING APPARATUS AND HEATING STRUCTURE THEREOF**

(30) Priority: 17.11.2022 CN 202223072237 U
(71) Applicant: Smoore International Holdings Limited, George Town, Grand Cayman, KY1-1111 (KY)
(72) Inventor: ZHANG, Guo, Shenzhen, Guangdong 518102 (CN); MA, Lei, Shenzhen, Guangdong 518102 (CN); ZHOU, Hongming, Shenzhen, Guangdong 518102 (CN); LI, Rihong, Shenzhen, Guangdong 518102 (CN); DU, Xianwu, Shenzhen, Guangdong 518102 (CN); CHU, Qingchen, Shenzhen, Guangdong 518102 (CN)
(74) Representative: Westphal, Mussgnug & Partner, Patentanwälte mbB
(86) International application number: PCT/CN2023/114112
(87) International publication number: WO 2024/103879

(57) **Abstract**

The present disclosure relates to an aerosol generating device and a heating structure thereof. The heating structure includes a heating element configured to radiate an infrared wave in a powered-on state and a tube body that is disposed in conjunction with the heating element and configured to allow the infrared wave to pass through. A spacing is defined between the heating element and a tube wall of the tube body. The heating element includes a heating part and a conductive part. The heating part includes at least two heating sections arranged spaced apart. The heating sections are electrically connected to the conductive part. The heating element of the present disclosure does not cause overheating of an aerosol generating substrate, and can greatly improve the vaping taste. In addition, in a high-temperature working state, the preheating time is greatly shortened, thereby greatly improving experience of a consumer. The heating part includes the at least two heating sections arranged spaced apart. The heating sections can match different aerosol generating substrates and perform segmented heating, to achieve proper temperature field distribution.

## Description

### TECHNICAL FIELD

The present disclosure relates to the field of heat-not-burn atomization, and more specifically, to an aerosol generating device and a heating structure thereof.

### BACKGROUND

In the related art, an aerosol generating device is an electronic device configured to heat an aerosol generating substrate (a solid substrate such as a plant leaf product, like tobacco) but not to combust the aerosol generating substrate. Generally, in the aerosol generating device, heating is performed at the center or the periphery of a heating element. Generally, the heating element is powered up to generate heat, and then the heat is directly transferred to an aerosol generating substrate through the heat conduction. The aerosol generating substrate is generally atomized within 350°C. The disadvantage of this heating manner is that the heating element directly transfers or indirectly transfers, by using a solid material through the heat conduction, the heat to the aerosol generating substrate. This requires that the working temperature of the heating element cannot be excessively high; otherwise, overheating of the substrate is to be caused, and the vaping taste of the e-cigarette is affected.

In addition, the low temperature of the heating element directly causes the long preheat time to be required for the aerosol generating device before the vaping is performed. Currently, the preheat time of a market product is basically 15 seconds or more, greatly affecting experience of a consumer. In addition, when the heating element is at the working temperature above 400°C, the aerosol generating substrate easily overheats, affecting the vaping taste. Therefore, how to properly configure a heating structure in a high-temperature working state is an urgent problem to be resolved in the art.

### SUMMARY

To resolve the technical problem, the present disclosure provides an improved aerosol generating device and a heating structure thereof.

Technical solutions adopted in the present disclosure to resolve the technical problem are as follows. A heating structure includes a heating element configured to radiate an infrared wave in a powered-on state and a tube body that is disposed in conjunction with the heating element and configured to allow the infrared wave to pass through. The heating element is at least partially spaced apart from a tube wall of the tube body. The heating element includes a heating part and a conductive part. The heating part includes at least two heating sections arranged spaced apart. The heating sections are electrically connected to the conductive part.

In some embodiments, the heating structure further includes a framework, the framework is disposed on the tube body, and at least one of the heating sections is disposed on the framework.

In some embodiments, the framework includes a first framework, a second framework, a third framework, and a fourth framework. The at least two heating sections include a first heating section and a second heating section connected to the first heating section. The first framework and the second framework are spaced apart and separately disposed on the first heating section. The third framework and the fourth framework are spaced apart and separately disposed on the second heating section.

In some embodiments, the heating part is longitudinally disposed. The at least two heating sections include a first heating section and a second heating section connected to the first heating section. The first heating section and/or the second heating section are/is wound on the framework in an M shape or an N shape.

In some embodiments, a length of the first heating section is less than, equal to, or greater than a length of the second heating section.

In some embodiments, the first heating section and the second heating section include a plurality of M-shaped or N-shaped sections disposed at intervals.

In some embodiments, the plurality of M-shaped or N-shaped sections are formed by winding or bending strip-shaped or linear heating wires. A distribution density of the plurality of M-shaped or N-shaped sections of the first heating section on the framework is lower than, equal to, or higher than a distribution density of the plurality of M-shaped or N-shaped sections of the second heating section on the framework.

In some embodiments, a radial dimension of the first framework is equal to a radial dimension of the second framework, and a radial dimension of the third framework is smaller than, equal to, or larger than a radial dimension of the second framework.

In some embodiments, a radial dimension of the first framework is smaller than a radial dimension of the second framework, and a radial dimension of the third framework is smaller than, equal to, or larger than a radial dimension of the second framework.

In some embodiments, a radial dimension of the first framework is larger than a radial dimension of the second framework, and a radial dimension of the third framework is smaller than, equal to, or larger than a radial dimension of the second framework.

In some embodiments, the first framework includes a plurality of first wire slots provided on an outer periphery edge of the first framework. The second framework includes second wire slots corresponding to the plurality of first wire slots. The heating part is wound on the plurality of first wire slots and the plurality of second wire slots in an M shape or an N shape. The third framework includes a plurality of third wire slots provided on an outer periphery edge of the third framework. The fourth framework includes fourth wire slots corresponding to the plurality of third wire slots. The heating part is wound on the plurality of third wire slots and the plurality of fourth wire slots in an M shape or an N shape.

In some embodiments, when a spacing between the plurality of first wire slots and the tube body is equal to a spacing between the plurality of second wire slots and the tube body, a spacing between the plurality of third wire slots and the tube body is greater than, less than, or equal to a spacing between the plurality of fourth wire slots and the tube body.

In some embodiments, when a spacing between the plurality of first wire slots and the tube body is less than a spacing between the plurality of second wire slots and the tube body, a spacing between the plurality of third wire slots and the tube body is greater than, less than, or equal to a spacing between the plurality of fourth wire slots and the tube body.

In some embodiments, when a spacing between the plurality of first wire slots and the tube body is greater than a spacing between the plurality of second wire slots and the tube body, a spacing between the plurality of third wire slots and the tube body is greater than, less than, or equal to a spacing between the plurality of fourth wire slots and the tube body.

In some embodiments, the heating part includes a heating substrate that generates heat in a powered-on state, and an infrared radiation layer that is disposed on an outer surface of the heating substrate and that is configured for radiating the infrared wave.

In some embodiments, the heating structure further includes a base, the tube body is mounted on the base, and the conductive part of the heating element passes through the base.

In some embodiments, the heating element is disposed on an inner side of the tube body, and a spacing is defined between the heating element and an inner wall of the tube body.

In some embodiments, the tube body includes a first sleeve tube and a second sleeve tube sleeved on an outer periphery of the first sleeve tube.

A spacing is defined between the first sleeve tube and the second sleeve tube, and an accommodating cavity configured to accommodate the heating element is defined by the spacing.

The heating element is disposed on and spaced apart from an outer periphery of the first sleeve tube, and a heating cavity configured to heat an aerosol generating substrate is defined on an inner side of the first sleeve tube.

In some embodiments, a reflective layer configured to reflect the infrared wave is disposed on an inner wall of the second sleeve tube.

In some embodiments, when a spacing between the plurality of first wire slots and the first sleeve tube is equal to a spacing between the plurality of second wire slots and the first sleeve tube, a spacing between the plurality of third wire slots and the first sleeve tube is greater than, less than, or equal to a spacing between the plurality of fourth wire slots and the first sleeve tube.

In some embodiments, when a spacing between the plurality of first wire slots and the first sleeve tube is less than a spacing between the plurality of second wire slots and the first sleeve tube, a spacing between the plurality of third wire slots and the first sleeve tube is greater than, less than, or equal to a spacing between the plurality of fourth wire slots and the first sleeve tube.

In some embodiments, when a spacing between the plurality of first wire slots and the first sleeve tube is greater than a spacing between the plurality of second wire slots and the first sleeve tube, a spacing between the plurality of third wire slots and the first sleeve tube is greater than, less than, or equal to a spacing between the plurality of fourth wire slots and the first sleeve tube.

The present disclosure also provides an aerosol generating device, including the heating structure described in any one of the foregoing embodiments.

The present disclosure has the following beneficial effects: The heating element of the heating structure of the present disclosure can radiate an infrared wave in a powered-on state. The infrared wave may pass through the tube body to and heat the aerosol generating substrate. When the maximum working temperature of the heating element reaches 1000°C or above (where the working temperature of the heating element of a conventional HNB generally does not exceed 400°C), the overheating of the aerosol generating substrate is not caused, and the vaping taste can even be greatly improved. In addition, the preheat time is greatly shortened, thereby greatly improving experience of a consumer.

The heating part includes the at least two heating sections arranged spaced apart. Therefore, the heating sections can match different aerosol generating substrates and perform segmented heating, to provide proper temperature field distribution, so that the burning of a part of the substrate is avoided, and the vaping taste is further improved.

### BRIEF DESCRIPTION OF THE DRAWINGS

The following further describes the present disclosure with reference to accompanying drawings and embodiments. In the accompanying drawings:
FIG. 1 is a schematic diagram of a three-dimensional structure of an aerosol generating device according to some embodiments of the present disclosure;
FIG. 2 is a schematic sectional view of a heating structure of the aerosol generating device shown in FIG. 1;
FIG. 3 is a schematic diagram of an exploded structure of the heating structure shown in FIG. 2;
FIG. 4 is a schematic diagram of a three-dimensional structure in which the heating element shown in FIG. 2 is wound, in an M shape, on a first framework, a second framework, a third framework, and a fourth framework that have different radial dimensions;
FIG. 5 is a schematic sectional view of a heating structure according to another embodiment of the present disclosure; and
FIG. 6 is a schematic diagram of an exploded structure of the heating structure shown in FIG. 5.

### DETAILED DESCRIPTION

To bring a clearer understanding of the technical features, objectives, and effects of the present disclosure, specific implementations of the present disclosure are described with reference to the accompanying drawings.

In the descriptions of the present disclosure, it should be understood that orientation or position relationships indicated by terms such as "axial", "length", "upper", "lower", "top", "inner", and "outer" are orientation or position relationships shown based on the accompanying drawings or orientation or position relationships that the product of the present disclosure is usually placed in use, and are merely used for describing the present disclosure and simplifying the description, rather than indicating or implying that the mentioned apparatus or element should have a particular orientation or be constructed and operated in a particular orientation. Therefore, there terms should not be construed as a limitation to the present disclosure.

In addition, terms "first" and "second" are used merely for the purpose of description, and cannot be construed as indicating or implying relative importance or implying a quantity of indicated technical features. Therefore, features restricted by "first" or "second" may explicitly indicate or implicitly include at least one of such features. In the descriptions of the present disclosure, unless explicitly specified, "a plurality of" means at least two, for example, two or three.

In the present disclosure, it should be noted that unless otherwise explicitly specified and limited, the terms "mount", "connect", "connection", and "fasten" should be understood in a broad sense. For example, a connection may be a fixed connection, a detachable connection, or an integral connection; or the connection may be a mechanical connection or an electrical connection; or the connection may be a direct connection, an indirect connection through an intermediary, or internal communication between two elements or mutual action relationship between two elements, unless otherwise specified explicitly. A person of ordinary skill in the art may understand specific meanings of the foregoing terms in the present disclosure according to specific situations.

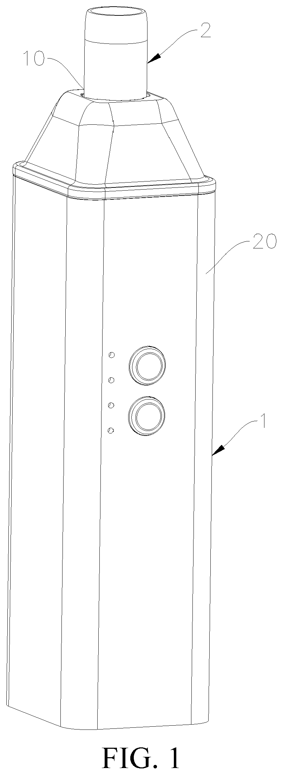

FIG. 1 shows an aerosol generating device 1 and aerosol-generating substrate 2 detachably inserted into one end of the aerosol generating device 1 in some embodiments of the present disclosure. In some embodiments, the aerosol generating device 1 may be a square cylinder, to facilitate hand holding by a user. The aerosol generating device 1 is configured to bake and heat the aerosol generating substrate 2 inserted therein at the low temperature to release an aerosol extract from the aerosol generating substrate 2, and the atomization stability and the atomization taste are good. In some embodiments, the aerosol generating substrate 2 may be a cylinder, and may be made of a string-shape or sheet-shape solid material that is made of leaves and/or stalks of a plant. In addition, a fragrance component may be further added to the solid material. It may be understood that the aerosol generating device 1 is not limited to being the square cylinder. In some other embodiments, the aerosol generating device 1 may alternatively be a cylinder, an elliptic cylinder, or in another shape.

In some embodiments, the aerosol generating device 1 may include a heating structure 10 and a housing 20 configured to carry the heating structure 10. In some embodiments, the heating structure 10 may be a cylinder, and the aerosol generating substrate 2 may be detachably inserted into the heating structure 10, so that the aerosol generating substrate 2 is heated and baked from the periphery. Alternatively, the aerosol generating substrate 2 is sleeved outside the heating structure 10, so that the aerosol generating substrate 2 is heated and baked from the inside. In some embodiments, the aerosol generating device 1 may further include a power supply component (not shown in the figure) disposed in the housing 20. The heating structure 10 may be partially inserted into the aerosol generating substrate. Specifically, a part of the heating structure 10 may be inserted into a substrate section of the aerosol generating substrate 2, and in a powered-on state, heat radiation is generated to heat the substrate section of the aerosol generating substrate 2, so that the aerosol generating substrate 2 is atomized to generate an aerosol. In this embodiment, the heat radiation may be infrared radiation. The heating structure 10 has the advantages of being easy to assemble, simple structure, high atomization efficiency, high stability, and long service life. The power supply component is electrically connected to the heating structure 10, to supply power to the heating structure 10.

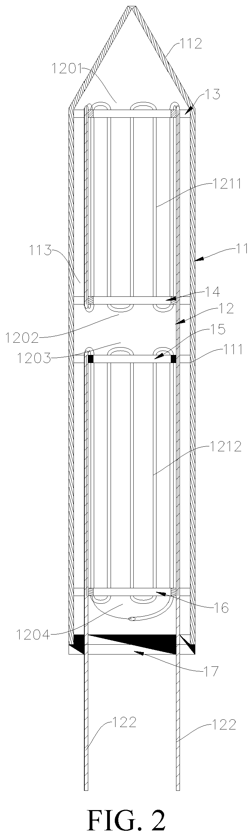

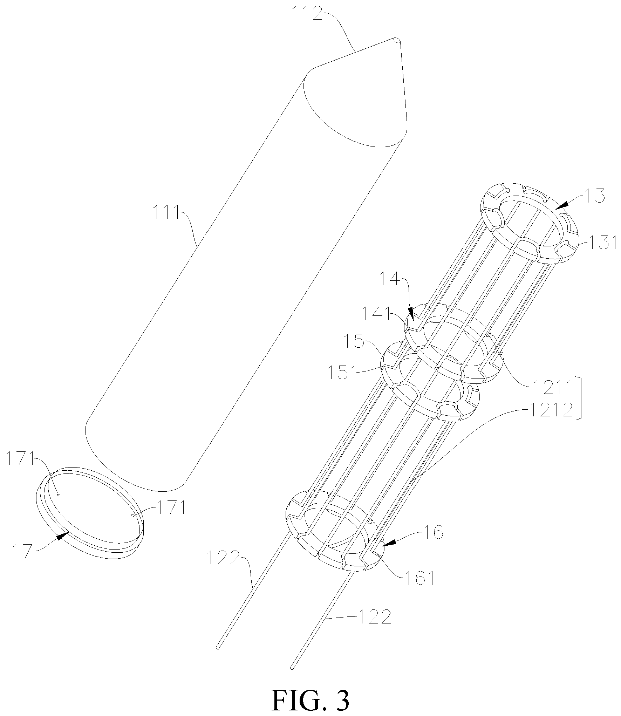

Refer to FIG. 2 and FIG. 3 together. In some embodiments, the heating structure 10 may include a tube body 11, a heating element 12, a first framework 13, a second framework 14, a third framework 15, a fourth framework 16, and a base 17. The heating element 12 is disposed on the first framework 13, the second framework 14, the third framework 15, and the fourth framework 16 in an M shape or an N shape. The heating element 12 is disposed in the tube body 11 together with the first framework 13, the second framework 14, the third framework 15, and the fourth framework 16. The tube body 11 covers at least a part of the heating element 12, and allows an optical wave to pass through the aerosol generating substrate 2. Specifically, in this embodiment, the tube body 11 may allow the infrared wave to pass through, so that the heating element 12 can radiate the infrared wave to heat the aerosol generating substrate 2. Specifically, a spacing is defined between the heating element 12 and the tube body 11. In the powered-on state, the heating element 12 rapidly heats up to 1000°C to 1300°C within 1s to 3s, the surface temperature of the tube body 11 may be controlled to be below 350°C, and the atomization temperature of the entire aerosol generating substrate 2 is controlled to 300°C to 350°C, to implement precise atomization of the aerosol generating substrate 2 in a band of 2 µm to 5 µm. Specifically, the heating element 12 includes a heating part 121 that radiates an infrared wave in the powered-on state and two conductive parts 122. The heating part 121 includes two heating sections. The two heating sections are respectively a first heating section 1211 and a second heating section 1212 connected to the first heating section 1211. The first heating section 1211 includes a first end 1201 and a second end 1202 opposite to the first end 1201. The second heating section 1212 includes a third end 1203 connected to the second end 1202 and a fourth end 1204 opposite to the third end 1203. The two conductive parts 122 are separately connected to the fourth end 1204 of the second heating section 1212. The first framework 13 and the second framework 14 are spaced apart and respectively disposed on the first end 1201 and the second end 1202. The third framework 15 and the fourth framework 16 are spaced apart and respectively disposed on the third end 1203 and the fourth end 1204. The first heating section 1211 is wound on the first framework 13 and the second framework 14 in an M shape or an N shape, and the second heating section 1212 is wound on the third framework 15 and the fourth framework 16 in an M shape or an N shape. The base 17 is disposed at the lower open end of the tube body 11, and the two conductive parts 122 are inserted into the base 17, to fasten the heating element 12. It may be understood that a quantity of the heating sections is not limited to two, and may be more than two, to match different aerosol generating substrates 2 and perform segmented heating on the aerosol generating substrates 2. In some embodiments, the heating structure 10 may further include a support rod (not shown in the figure). The support rod is configured to connect the first framework 13, the second framework 14, the third framework 15, and the fourth framework 16 to each other and is inserted into the base 17 to fasten the first framework 13, the second framework 14, the third framework 15, and the fourth framework 16 to the inner surface of the tube body 11. It may be understood that, in other embodiments, the first framework 13, the second framework 14, the third framework 15, and the fourth framework 16 may alternatively be fastened to the inner surface of the tube body 11 in one of manners including direct bonding, clamping, or hot melting. The maximum working temperature of the heating element 12 ranges from 500°C to 1300°C, which is much higher than 400°C in the conventional technologies, so that problems such as burning easily and inconsistent taste in the high-temperature working environment are resolved, and the preheat time is greatly shortened.

In some embodiments, the tube body 11 may be a hollow tube. Specifically, the tube body 11 includes a tubular body 111 with a circular cross section and a pointed top structure 112 disposed at one end of the tubular body 111. Certainly, it may be understood that, in some other embodiments, the cross section of the tubular body 111 is not limited to being circular. The tubular body 111 is of a hollow structure provided with an opening at one end. The tube body 11 may be mounted on the base 17. Specifically, the tube body 11 may be partially inserted into the base 17. The opening of the tube body 11 may be in the base 17. The pointed top structure 112 is disposed at the end of the tubular body 111 away from the opening. Disposition of the pointed top structure 112 facilitates insertion of at least a part of the heating structure 10 into the aerosol generating substrate 2. In this embodiment, a first accommodating cavity 113 is defined on the inner side of the tube body 11. The first accommodating cavity 113 is a cylindrical cavity and may be unsealed. When the heating element 12 is mounted therein, the first accommodating cavity 113 does not need to be evacuated or filled with an inactive gas. It may be understood that, in some other embodiments, the heating element 12 may alternatively be disposed on and spaced apart from the outer periphery of the tube body 11, and a second accommodating cavity for accommodating the aerosol generating substrate 2 may be defined on the inner side of the tube body 11. In this embodiment, a spacing is defined between the inner wall of the tube body 11 and the heating element 12, and the spacing may be filled with air or in a vacuum state. The spacing is defined, so that there is no direct contact between the tube body 11 and the heating element 12.

In some embodiments, the first framework 13 may be a circular ring and may include a plurality of first wire slots 131 provided on the outer periphery edge of the first framework 13 at equal intervals. In some embodiments, the second framework 14 may be a circular ring and may include a plurality of second wire slots 141 that are provided on the outer periphery edge of the second framework 14 and that correspond to the plurality of first wire slots 131. In some embodiments, the third framework 15 may be a circular ring and may include a plurality of third wire slots 151 provided on the outer periphery edge of the third framework 15. In some embodiments, the fourth framework 16 may be a circular ring and may include a plurality of fourth wire slots 161 that are provided on the outer periphery edge of the fourth framework 16 and that correspond to the plurality of third wire slots 151. The plurality of first wire slots 131 and the plurality of second wire slots 141 are used for the first heating section 1211 to be wound on, so that the first heating section 1211 is wound on the plurality of first wire slots 131 and the plurality of second wire slots 141 in an M shape or an N shape. The plurality of third wire slots 151 and the plurality of fourth wire slots 161 are used for the second heating section 1212 to be wound on, so that the second heating section 1212 is wound on the plurality of third wire slots 151 and the plurality of fourth wire slots 161 in an M shape or an N shape. In this way, the heating part 121 can be disposed as a whole in a hollow manner, so that the heating element 12 has no central conduction risk, the heating element 12 is not caused to be partially unheated. In addition, there is no risk that the central heating part is covered by the outer ring heating part, so that the heat utilization of the heating element 12 is increased. It may be understood that the first heating section 1211 may alternatively be wound on the plurality of first wire slots 131 and the plurality of second wire slots 141 in another shape. Correspondingly, the second heating section 1212 may alternatively be wound on the plurality of third wire slots 151 and the plurality of fourth wire slots 161 in another shape. It may be understood that the first framework 13, the second framework 14, the third framework 15, and the fourth framework 16 are not limited to being the circular ring and may alternatively be in another shape such as a square ring. The first framework 13, the second framework 14, the third framework 15, and the fourth framework 16 are also not limited to being the ring and may alternatively be a cylinder.

In some embodiments, the first heating section 1211 and the second heating section 1212 are longitudinally disposed. The length of the first heating section 1211 is less than, equal to, or greater than the length of the second heating section 1212, to match different aerosol generating substrates 2 and perform segmented heating.

In some embodiments, the first heating section 1211 and the second heating section 1212 include a plurality of M-shaped or N-shaped sections. The plurality of M-shaped or N-shaped sections are formed by winding or bending strip-shaped or linear heating wires. The distribution density of the plurality of M-shaped or N-shaped sections of the first heating section 1211 on the first framework 13 and the second framework 14 is lower than, equal to, or higher than the distribution density of the plurality of M-shaped or N-shaped sections of the second heating section 1212 on the third framework 15 and the fourth framework 16. In this way, a plurality of external temperature fields are formed, to match a plurality of types of aerosol generating substrates 2 or to meet different power output requirements. The denser distribution of the M-shaped or N-shaped sections indicates the higher temperature of the temperature field.

In some embodiments, the spacing between the plurality of first wire slots 131 and the tube body 11 and the spacing between the plurality of second wire slots 141 and the tube body 11 include a plurality of configurations, and the spacing between the plurality of third wire slots 151 and the tube body 11 and the spacing between the plurality of fourth wire slots 161 and the tube body 11 include a plurality of configurations. The spacing between the tube body 11 and the heating element 12 may be adjusted by adjusting the spacing between the plurality of first wire slots 131 and the tube body 11 and the spacing between the plurality of second wire slots 141 and the tube body 11 and/or the spacing between the plurality of third wire slots 151 and the tube body 11 and the spacing between the plurality of fourth wire slots 161 and the tube body 11, to avoid the excessively high local temperature of the heating element 12 caused by the heating element 12 being in contact with the tube body 11. In addition, the temperature difference between the surface of the tube body 11 and the surface of the heating element 12 may be adjusted by adjusting the spacing, to avoid the scorching of the aerosol generating substrate 2. In some embodiments, when the spacing between the plurality of first wire slots 131 and the tube body 11 is equal to the spacing between the plurality of second wire slots 141 and the tube body 11, the spacing between the plurality of third wire slots 151 and the tube body 11 may be greater than, less than, or equal to the spacing between the plurality of fourth wire slots 161 and the tube body 11. When the spacing between the plurality of first wire slots 131 and the tube body 11 is less than the spacing between the plurality of second wire slots 141 and the tube body 11, the spacing between the plurality of third wire slots 151 and the tube body 11 may be greater than, less than, or equal to the spacing between the plurality of fourth wire slots 161 and the tube body 11. When the spacing between the plurality of first wire slots 131 and the tube body 11 is greater than the spacing between the plurality of second wire slots 141 and the tube body 11, the spacing between the plurality of third wire slots 151 and the tube body 11 may be greater than, less than, or equal to the spacing between the plurality of fourth wire slots 161 and the tube body 11.

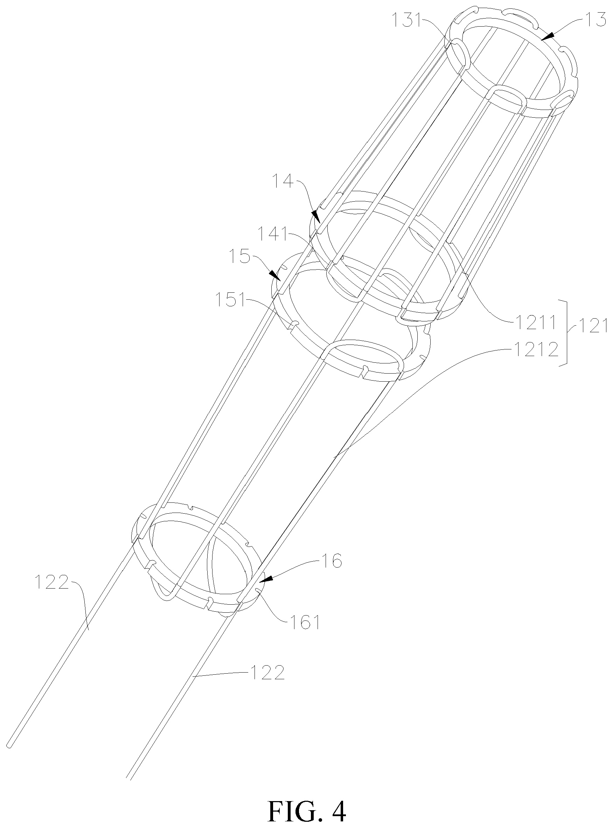

Further, as shown in FIG. 4, in some embodiments, the radial dimensions of the first framework 13 and the second framework 14 include a plurality of configurations, and the radial dimensions of the third framework 15 and the fourth framework 16 include a plurality of configurations. The radial dimensions of the first framework 13 and the second framework 14 and the radial dimensions of the third framework 15 and the fourth framework 16 may be set, so that a spacing between the upper end of the heating element 12 and the tube body 11 is different from a spacing between the lower end of the heating element 12 and the tube body 11, to control the temperature field, so as to match different aerosol generating substrates 2 or devices. The denser wire winding indicates the higher temperature of the temperature field. In some embodiments, when the radial dimension of the first framework 13 is equal to the radial dimension of the second framework 14, the radial dimension of the third framework 15 may be smaller than, equal to, or larger than the radial dimension of the fourth framework 16. When the radial dimension of the first framework 13 is smaller than the radial dimension of the second framework 14, the radial dimension of the third framework 15 may be smaller than, equal to, or larger than the radial dimension of the fourth framework 16. When the radial dimension of the first framework 13 is greater than the radial dimension of the second framework 14, the radial dimension of the third framework 15 may be smaller than, equal to, or larger than the radial dimension of the fourth framework 16.

It should be noted that the heating element 12 includes a heating part and a conductive part. The heating part includes at least two heating sections arranged spaced apart. The two heating sections may be electrically connected by using a heating substrate, for example, a heating substrate of a straight section, or may be electrically connected by using another conductive material. In addition, the two heating sections may alternatively generate heat independently. To be specific, there is no electric connection between the two heating sections, and the two heating sections are controlled to generate heat separately or simultaneously based on a specific requirement. Similarly, the heating part may alternatively include three or more heating sections arranged at intervals. For a connection manner between the heating sections, refer to the foregoing implementations. Using a heating wire as an example, the at least two heating sections may be integrally formed by winding one heating wire, and the heating sections are electrically connected by a straight section having a particular length of the heating wire. In addition, each heating section may be formed by winding a separate heating wire. The heating sections may be electrically connected by using a resistive material, so that the heating sections are connected in series. Alternatively, the heating sections may not be electrically connected. Each heating section is separately connected to the conductive part, and the plurality of heating sections are connected in parallel. Through the foregoing disposing manner, segmented heating can be effectively implemented, and the temperature field is controlled to be distributed properly, so that the vaping taste is further improved.

In some embodiments, the heating element 12 may include an infrared radiation layer and a heating substrate that generates heat in the powered-on state. The heating substrate may generate heat in the powered-on state. The infrared radiation layer is disposed on the outer surface of the heating substrate and is used for radiating the infrared wave. In this embodiment, the heating substrate and the infrared radiation layer are distributed in a concentric circle on the cross section of the heating part.

In this embodiment, the heating substrate may be wound or bent to be a cylinder as a whole. Specifically, the heating substrate may be a heating wire. Certainly, it may be understood that, in some other embodiments, the heating substrate may not be limited to being the cylinder, and may alternatively be a sheet. In other words, the heating substrate may be a heating sheet. The heating substrate includes a metal substrate having the high-temperature oxidation resistance property. The metal substrate may be a metal wire. Specifically, the heating substrate may be a metal material having good high-temperature oxidation resistance and high stability and not easily deformed, for example, a nickel-chromium alloy substrate (for example, a nickel-chromium alloy wire) or an iron-chromium aluminum alloy substrate (for example, an iron-chromium aluminum alloy wire). In this embodiment, the radial dimension of the heating substrate may range from 0.15 mm to 0.8 mm.

In this embodiment, the heating element 12 further includes an oxidation resistance layer, and the oxidation resistance layer is formed between the heating substrate and the infrared radiation layer. Specifically, the oxidation resistance layer may be an oxide film. The heating substrate is subject to high-temperature heat treatment, a dense oxide film is formed on the surface of the heating substrate, and the oxide film forms the oxidation resistance layer. Certainly, it may be understood that, in some other embodiments, the oxidation resistance layer is not limited to including the oxide film formed by itself. In some other embodiments, the oxidation resistance layer may be an oxidation resistance coating applied to the outer surface of the heating substrate. The oxidation resistance layer is formed, to ensure that the heating substrate is not oxidized or rarely oxidized when being heated in the air environment, thereby improving the stability of the heating substrate. Therefore, there is no need to evacuate the first accommodating cavity 113, fill the first accommodating cavity 113 with an inactive gas or a reducing gas, and seal the opening, so that the entire process of assembling the heating structure 10 is simplified, and the manufacturing costs are reduced. In this embodiment, the thickness of the oxidation resistance layer may be selected from 1 µm to 150 µm. When the thickness of the oxidation resistance layer is less than 1 µm, the heating substrate is easily oxidized. When the thickness of the oxidation resistance layer is greater than 150 µm, the heat conduction between the heating substrate and the infrared radiation layer may be affected.

In this embodiment, the infrared radiation layer may be an infrared layer. The infrared layer may be formed on the side of the oxidation resistance layer away from the heating substrate by an infrared layer-forming substrate through high-temperature heat treatment. In this embodiment, the infrared layer-forming substrate may be silicon carbide, spinel, or a composite substrate thereof. Certainly, it may be understood that, in some other embodiments, the infrared radiation layer is not limited to being the infrared layer. In some other embodiments, the infrared radiation layer may be a composite infrared layer. In this embodiment, the infrared layer may be formed on the side of the oxidation resistance layer away from the heating substrate in manners including dip coating, spraying, and brush coating. The thickness of the infrared radiation layer may range from 10 µm to 300 µm. When the thickness of the infrared radiation layer ranges from 10 µm to 300 µm, the heat radiation effect thereof is good. Therefore, the atomization efficiency and the atomization taste of the aerosol generating substrate 2 are good. Certainly, it may be understood that, in some other embodiments, the thickness of the infrared radiation layer is not limited to ranging from 10 µm to 300 µm.

In some embodiments, the heating element 12 further includes a binding layer disposed between the oxidation resistance layer and the infrared radiation layer. The binding layer may be used for preventing local breakdown of the heating substrate, to further improve the binding force between the oxidation resistance layer and the infrared radiation layer. In some embodiments, a binder in the binding layer may be a glass powder. In other words, the binding layer may be a glass powder layer. In some implementations, the base 17 may be made of a material such as a ceramics insulation material and a PEEK high-temperature resistance insulation material. The base 17 may include two fixing through holes 171 provided on the base 17. The two fixing through holes 171 allow insertion of the two conductive parts 122.

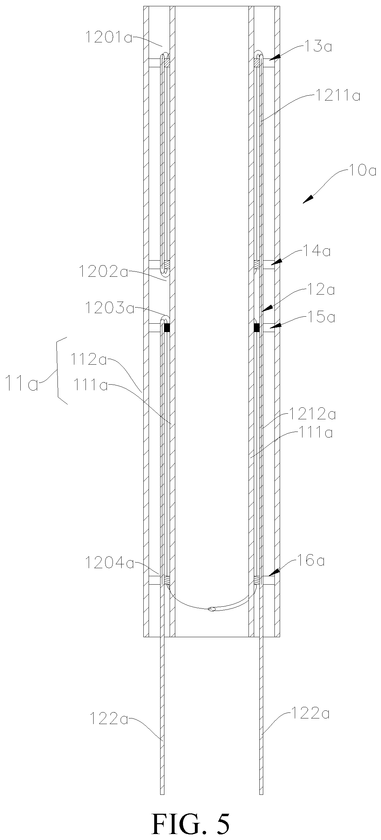

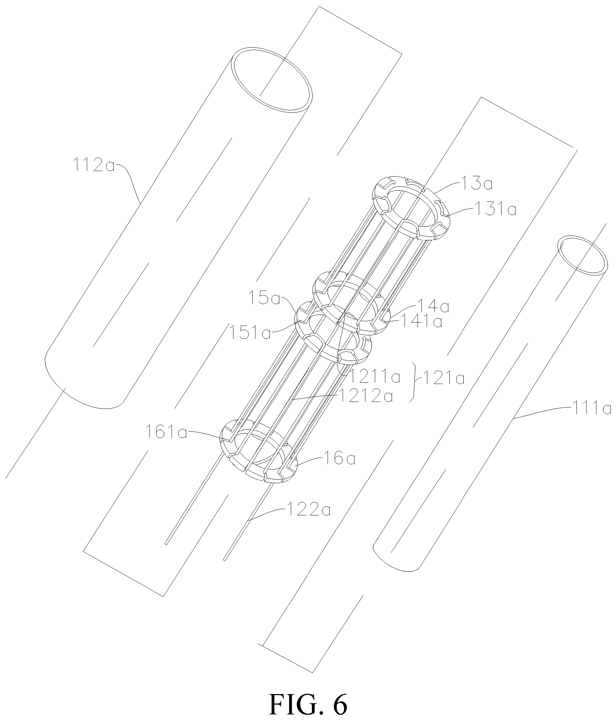

FIG. 5 and FIG. 6 show a heating structure 10a according to a second embodiment of the present disclosure. The heating structure 10a mainly differs from the first embodiment in that in some embodiments, the heating structure 10a may include a tube body 11a, a heating element 12a, a first framework 13a, a second framework 14a, a third framework 15a, and a fourth framework 16a.

The heating element 12a includes a heating part 121a that generates heat radiation in a powered-on state and two conductive parts 122a. The heating part 121a includes two heating sections. The two heating sections are respectively a first heating section 1211a and a second heating section 1212a connected to the first heating section 1211a. The first heating section 1211a includes a first end 1201a and a second end 1202a opposite to the first end 1201a. The second heating section 1212a includes a third end 1203a connected to the second end 1202a and a fourth end 1204a opposite to the third end 1203a. The two conductive parts 122a are separately connected to the fourth end 1204a. The first framework 13a and the second framework 14a are spaced apart and respectively disposed on the first end 1201a and the second end 1202a in parallel. The third framework 15a and the fourth framework 16a are spaced apart and respectively disposed on the third end 1203a and the fourth end 1204a in parallel. The first heating section 1211a is wound on the first framework 13a and the second framework 14a in an M shape or an N shape, and the second heating section 1212a is wound on the third framework 15a and the fourth framework 16a in an M shape or an N shape. It may be understood that a quantity of the heating sections is not limited to two, and may be more than two, to match different aerosol generating substrates and perform segmented heating on the aerosol generating substrates. In some embodiments, the heating structure may further include a support rod (not shown in the figure). The support rod is configured to connect the first framework 13a, the second framework 14a, the third framework 15a, and the fourth framework 16a to each other. It may be understood that, in other embodiments, the first framework 13a, the second framework 14a, the third framework 15a, and the fourth framework 16a are fastened to the outer surface of the tube body 11a in one of manners including direct bonding, clamping, and hot melting.

In some embodiments, the tube body 11a may include a first sleeve tube 111a and a second sleeve tube 112a sleeved on the outer periphery of the first sleeve tube 111a. The first sleeve tube 111a is of a hollow structure with two open ends. The first sleeve tube 111a may be a cylinder, and the inner diameter of the first sleeve tube 111a may be slightly greater than the outer diameter of the aerosol generating substrate. A spacing is defined between the first sleeve tube 111a and the second sleeve tube 1123, and an accommodating cavity for accommodating the heating element 12a is defined by the spacing. The axial length of the first sleeve tube 111a may be greater than the axial length of the second sleeve tube 112a. The second sleeve tube 112a may be sleeved on the outer periphery of the first sleeve tube 111a. The second sleeve tube 112a may be a cylinder. The radial dimension of the second sleeve tube 112a may be greater than the radial dimension of the first sleeve tube 111a. In some embodiments, the heating element 12a is wound on the outer periphery of the first sleeve tube 111a and is spaced apart from the outer wall of the second sleeve tube 112a, so that there may be a particular temperature difference between the inner wall of the accommodating cavity and the heating element 12a, to achieve heat insulation. A heating cavity for heating the aerosol generating substrate is defined on the inner side of the first sleeve tube 111a.

In some embodiments, the inner side of the second sleeve tube 112a is provided with a reflective layer. The reflective layer is for reflecting heat from the heating element 12a and radiating the heat to the aerosol generating substrate, to enhance the energy efficiency. It may be understood that the first sleeve tube 111a and the second sleeve tube 112a are not limited to being cylinder, and may alternatively be in another shape such as a square cylinder and an elliptical cylinder.

In some embodiments, the second sleeve tube 112a may further include a fixing structure. The fixing structure is configured to fasten the heating element 12a.

In some embodiments, the first framework 13a may be a circular ring and may include a plurality of first wire slots 131a provided on the outer periphery edge of the first framework 13a at equal intervals. In some embodiments, the second framework 14a may be a circular ring and may include a plurality of second wire slots 141a that are provided on the outer periphery edge of the second framework 14a and that correspond to the plurality of first wire slots 131a. In some embodiments, the third framework 15a may be a circular ring and may include a plurality of third wire slots 151a provided on the outer periphery edge of the third framework 15a at equal intervals. In some embodiments, the fourth framework 16a may be a circular ring and may include a plurality of fourth wire slots 161a that are provided on the outer periphery edge of the fourth framework 16a and that correspond to the plurality of third wire slots 151a. The plurality of first wire slots 131a and the second wire slots 141a are used for the first heating section 1211a to be wound on, so that the first heating section 1211a is wound on the plurality of first wire slots 131a and the plurality of second wire slots 141a in an M shape or an N shape. The plurality of third wire slots 151 and the plurality of fourth wire slots 161 are used for the second heating section 1212 to be wound on, so that the second heating section 1212a is wound on the plurality of third wire slots 151a and the plurality of fourth wire slots 161a in an M shape or an N shape. In this way, the heating part 121a can be disposed in a hollow manner, so that the heating element 12a has no central conduction risk, the heating element 12a is not caused to be partially unheated. In addition, there is no risk that the central heating part is covered by the outer ring heating part, so that the heat utilization of the heating element 12a is increased. It may be understood that the first heating section 1211a may alternatively be wound on the plurality of first wire slots 131a and the plurality of second wire slots 141a in another shape. Correspondingly, the second heating section 1212a may alternatively be wound on the plurality of third wire slots 151a and the plurality of fourth wire slots 161a in another shape. It may be understood that the first framework 13a, the second framework 14a, the third framework 15a, and the fourth framework 16a are not limited to being the circular ring and alternatively be in another shape such as a square ring. The first framework 13a, the second framework 14a, the third framework 15a, and the fourth framework 16a are also not limited to being the ring and may alternatively be a cylinder.

In some embodiments, the spacing between the plurality of first wire slots 131a and the first sleeve tube 111a and the spacing between the plurality of second wire slots 141a and the first sleeve tube 111a include a plurality of configurations, and the spacing between the plurality of third wire slots 151a and the first sleeve tube 111a and the spacing between the plurality of fourth wire slots 161a and the first sleeve tube 111a include a plurality of configurations. A spacing between the first sleeve tube 111a and the heating element 12a may be adjusted by adjusting the spacing between the plurality of first wire slots 131a and the first sleeve tube 111a and the spacing between the plurality of second wire slots 141a and the first sleeve tube 111a and/or the spacing between the plurality of third wire slots 151a and the first sleeve tube 111a and the spacing between the plurality of fourth wire slots 161a and the first sleeve tube 111a, to avoid the excessively high local temperature of the heating element 12a caused by the heating element 12a being in contact with the first sleeve tube 111a. In addition, the temperature difference between the surface of the first sleeve tube 111a and the surface of the heating element 12a may be adjusted by adjusting the spacing, to avoid the scorching of the aerosol generating substrate. In some embodiments, when the spacing between the plurality of first wire slots 131a and the first sleeve tube 111a is equal to the spacing between the plurality of second wire slots 141a and the first sleeve tube 111a, the spacing between the plurality of third wire slots 151a and the first sleeve tube 111a may be greater than, less than, or equal to the spacing between the plurality of fourth wire slots 161a and the first sleeve tube 111a. When the spacing between the plurality of first wire slots 131a and the first sleeve tube 111a is less than the spacing between the plurality of second wire slots 141a and the first sleeve tube 111a, the spacing between the plurality of third wire slots 151a and the first sleeve tube 111a may be greater than, less than, or equal to the spacing between the plurality of fourth wire slots 161a and the first sleeve tube 111a. When the spacing between the plurality of first wire slots 131a and the first sleeve tube 111a is greater than the spacing between the plurality of second wire slots 141a and the first sleeve tube 111a, the spacing between the plurality of third wire slots 151a and the first sleeve tube 111a may be greater than, less than, or equal to the spacing between the plurality of fourth wire slots 161a and the first sleeve tube 111a.

It may be understood that the foregoing embodiments only describe preferred implementations of the present disclosure, but cannot be construed as a limitation to the patent scope of the present disclosure. It should be noted that, for a person of ordinary skill in the art, the foregoing technical features may be combined freely, and several transformations and improvements can be further made without departing from the idea of the present disclosure. These transformations and improvements all fall within the protection scope of the present disclosure. Therefore, any equivalent change or modification made within the scope of the claims of the present disclosure shall fall within the scope of the claims of the present disclosure.

## Claims

1. A heating structure, comprising:
a heating element configured to radiate an infrared wave in a powered-on state; and
a tube body disposed in conjunction with the heating element, the tube body being configured to allow the infrared wave to pass through,
wherein the heating element is at least partially spaced apart from a tube wall of the tube body, and
wherein the heating element comprises a heating part and a conductive part, the heating part comprises at least two heating sections arranged spaced apart, and the heating sections are electrically connected to the conductive part.

2. The heating structure of claim 1, wherein the heating structure further comprises a framework, the framework is disposed on the tube body, and at least one of the heating sections is disposed on the framework.

3. The heating structure of claim 2, wherein the framework comprises a first framework, a second framework, a third framework, and a fourth framework, wherein the at least two heating sections comprise a first heating section and a second heating section connected to the first heating section, wherein the first framework and the second framework are spaced apart and separately disposed on the first heating section, and wherein the third framework and the fourth framework are spaced apart and separately disposed on the second heating section.

4. The heating structure of claim 2, wherein the heating part is longitudinally disposed, wherein the at least two heating sections comprise a first heating section and a second heating section connected to the first heating section, and wherein the first heating section and/or the second heating section are/is wound on the framework in an M shape or an N shape.

5. The heating structure of claim 4, wherein a length of the first heating section is less than, equal to, or greater than a length of the second heating section.

6. The heating structure of claim 4, wherein the first heating section and the second heating section comprise a plurality of M-shaped or N-shaped sections disposed at intervals.

7. The heating structure of claim 6, wherein the plurality of M-shaped or N-shaped sections are formed by winding or bending strip-shaped or linear heating wires, and
wherein a distribution density of the plurality of M-shaped or N-shaped sections of the first heating section on the framework is lower than, equal to, or higher than a distribution density of the plurality of M-shaped or N-shaped sections of the second heating section on the framework.

8. The heating structure of claim 3, wherein a radial dimension of the first framework is equal to a radial dimension of the second framework, and a radial dimension of the third framework is smaller than, equal to, or larger than a radial dimension of the second framework.

9. The heating structure of claim 3, wherein a radial dimension of the first framework is smaller than a radial dimension of the second framework, and a radial dimension of the third framework is smaller than, equal to, or larger than a radial dimension of the second framework.

10. The heating structure of claim 3, wherein a radial dimension of the first framework is larger than a radial dimension of the second framework, and a radial dimension of the third framework is smaller than, equal to, or larger than a radial dimension of the second framework.

11. The heating structure of claim 3, wherein the first framework comprises a plurality of first wire slots provided on an outer periphery edge of the first framework, the second framework comprises second wire slots corresponding to the plurality of first wire slots, and the heating part is wound on the plurality of first wire slots and the plurality of second wire slots in an M shape or an N shape; and wherein the third framework comprises a plurality of third wire slots provided on an outer periphery edge of the third framework, the fourth framework comprises fourth wire slots corresponding to the plurality of third wire slots, and the heating part is wound on the plurality of third wire slots and the plurality of fourth wire slots in an M shape or an N shape.

12. The heating structure of claim 11, wherein, when a spacing between the plurality of first wire slots and the tube body is equal to a spacing between the plurality of second wire slots and the tube body, a spacing between the plurality of third wire slots and the tube body is greater than, less than, or equal to a spacing between the plurality of fourth wire slots and the tube body.

13. The heating structure of claim 11, wherein when a spacing between the plurality of first wire slots and the tube body is less than a spacing between the plurality of second wire slots and the tube body, a spacing between the plurality of third wire slots and the tube body is greater than, less than, or equal to a spacing between the plurality of fourth wire slots and the tube body.

14. The heating structure of claim 13, wherein, when the spacing between the plurality of first wire slots and the tube body is greater than the spacing between the plurality of second wire slots and the tube body, the spacing between the plurality of third wire slots and the tube body is greater than, less than, or equal to the spacing between the plurality of fourth wire slots and the tube body.

15. The heating structure of claim 1, wherein the heating part comprises a heating substrate that generates heat in a powered-on state, and an infrared radiation layer that is disposed on an outer surface of the heating substrate and that is configured for radiating the infrared wave.

16. The heating structure of claim 1, wherein the heating structure further comprises a base, the tube body is mounted on the base, and the conductive part of the heating element passes through the base.

17. The heating structure of claim 1, wherein the heating element is disposed on an inner side of the tube body, and a spacing is defined between the heating element and an inner wall of the tube body.

18. The heating structure of claim 11, wherein the tube body comprises a first sleeve tube and a second sleeve tube sleeved on an outer periphery of the first sleeve tube;
wherein a spacing is defined between the first sleeve tube and the second sleeve tube, and an accommodating cavity configured to accommodate the heating element is defined by the spacing; and
wherein the heating element is disposed on and spaced apart from an outer periphery of the first sleeve tube, and a heating cavity configured to heat an aerosol generating substrate is defined on an inner side of the first sleeve tube.

19. The heating structure of claim 18, wherein a reflective layer configured to reflect the infrared wave is disposed on an inner wall of the second sleeve tube.

20. The heating structure of claim 18, wherein when a spacing between the plurality of first wire slots and the first sleeve tube is equal to a spacing between the plurality of second wire slots and the first sleeve tube, a spacing between the plurality of third wire slots and the first sleeve tube is greater than, less than, or equal to a spacing between the plurality of fourth wire slots and the first sleeve tube.

21. The heating structure of claim 18, wherein when a spacing between the plurality of first wire slots and the first sleeve tube is less than a spacing between the plurality of second wire slots and the first sleeve tube, a spacing between the plurality of third wire slots and the first sleeve tube is greater than, less than, or equal to a spacing between the plurality of fourth wire slots and the first sleeve tube.

22. The heating structure of claim 18, wherein when a spacing between the plurality of first wire slots and the first sleeve tube is greater than a spacing between the plurality of second wire slots and the first sleeve tube, a spacing between the plurality of third wire slots and the first sleeve tube is greater than, less than, or equal to a spacing between the plurality of fourth wire slots and the first sleeve tube.

23. An aerosol generating device, comprising:
the heating structure of any one of claims 1 to 22.
